# EUROPEAN PATENT APPLICATION

(11) **EP 1 416 558 A2**
(43) Date of publication of application: **06.05.2004**
(21) Application number: 03254891.9
(22) Date of filing: 06.08.2003
(51) Int. Cl.: H01M 8/02

(54) **Method and apparatus for fuel cell thermal management**

(30) Priority: 12.08.2002 US 216375
(71) Applicant: GENERAL ELECTRIC COMPANY, Schenectady, NY 12345 (US)
(72) Inventor: Bunker, Ronald Scott, Niskayuna New York 12309 (US)
(74) Representative: Goode, Ian Roy

(57) **Abstract**

A fuel cell assembly (100) comprising: a first fuel cell unit (110) adapted for generating electrical power from a fuel flow and an oxidant flow; and a fluid heat exchanger (120) adapted for transferring heat between the fuel cell unit (110) and a heat exchanging fluid flow.

## Description

The present invention relates generally to the field of thermal management of fuel cells and more specifically to the use of fluid heat exchangers for thermal management of fuel cell stacks.

In a wide variety of applications, fuel cell stacks, such as, for example, solid oxide fuel cell stacks, have demonstrated a potential for high efficiency and low pollution in power generation. It is desirable that a fuel cell stack design allow for staging of fuel cell units and also allow for in-stack fuel reforming . However, problems associated with thermal management persist, particularly as regards intercooling of the fluid between a first fuel cell unit and a second fuel cell unit. Accordingly, opportunites exist for improved thermal management of the fuel cell stacks.

The opportunities described above are addressed, in one embodiment of the present invention, by a fuel cell assembly comprising a first fuel cell unit adapted for generating electrical power from a fuel flow and an oxidant flow; and a fluid heat exchanger adapted for transferring heat between the fuel cell unit and a heat exchanging fluid flow.

These and other features, aspects, and advantages of the present invention will become better understood when the following detailed description is read with reference to the accompanying drawings in which like characters represent like parts throughout the drawings, wherein:
Figure 1 illustrates an isometric drawing of a fuel cell unit.
Figure 2 illustrates an isometric drawing of a fuel cell assembly in accordance with one embodiment of the present invention.
Figure 3 illustrates an isometric drawing of a fuel cell assembly in accordance with a more detailed embodiment of the present invention.
Figure 4 illustrates an isometric drawing of a fuel cell stack.

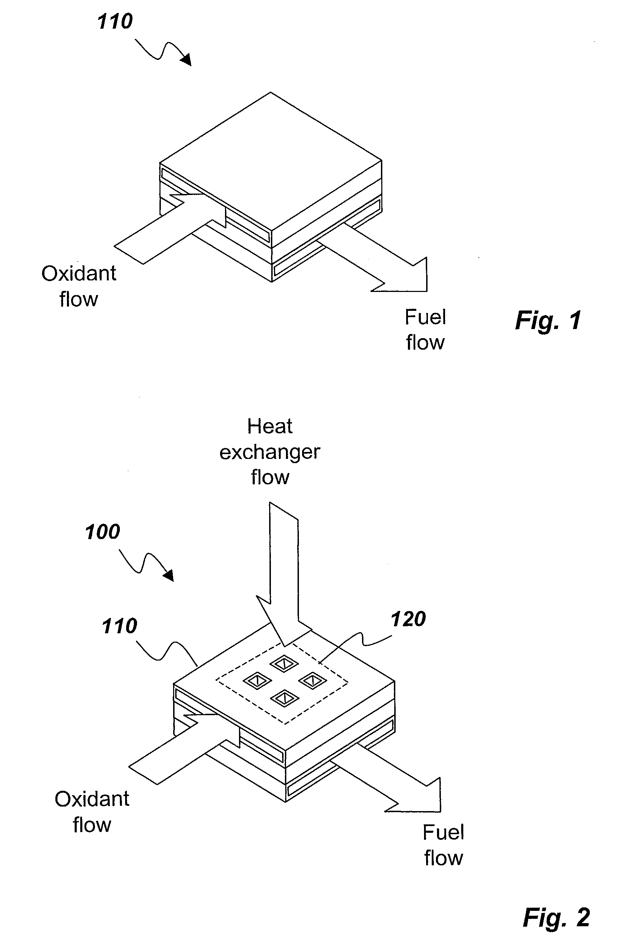

Figure 1 illustrates an isometric drawing of a fuel cell unit showing a fuel flow and an oxidant flow.

In accordance with one embodiment of the present invention, Figure 2 illustrates an isometric drawing of a fuel cell assembly 100 comprising a first fuel cell unit 110 and a fluid heat exchanger 120. In operation, first fuel cell unit 110 generates electrical power from the fuel flow and the oxidant flow. Fluid heat exchanger 120 transfers heat between fuel cell unit 110 and a heat exchanging fluid flow.

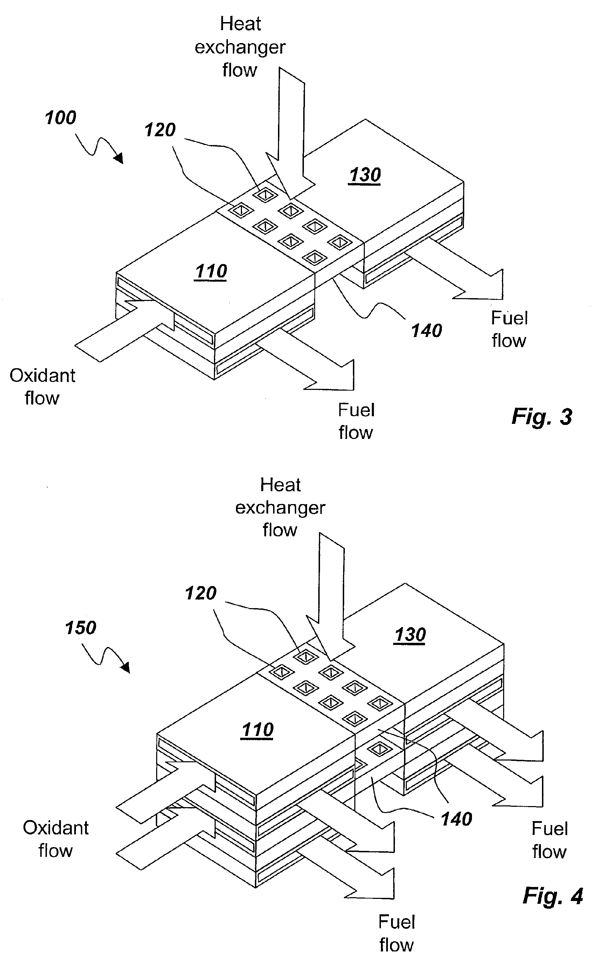

In accordance with another more detailed embodiment of the present invention, Figure 3 illustrates fuel cell assembly 100 further comprising a second fuel cell unit 130 and an interconnection unit 140. Interconnection unit 140 electrically and fluidically couples first fuel cell unit 110 to second fuel cell unit 130. According to a particular embodiment, fluid heat exchanger 120 is disposed inside interconnection unit 140.

First fuel cell unit 100 and second fuel cell unit 130 comprise any device or system capable of performing the indicated operations using a fuel cell. Examples of fuel cells include, without limitation, solid oxide fuel cells, proton exchange membrane fuel cells, molten carbonate fuel cells, phosphoric acid fuel cells, alkaline fuel cells, direct methanol fuel cells, regenerative fuel cells, zinc air fuel cells, and protonic ceramic fuel cells.

In another embodiment of the present invention, first fuel cell unit 110 and second fuel cell unit 130 comprise at least one planar fuel cell. In still another embodiment of the present invention, first fuel cell unit 110 and second fuel cell unit 130 comprise at least one tubular fuel cell.

Figure 4 illustrates an isometric drawing of an exemplary fuel cell stack 150. Fluid heat exchanger 120 comprises any heat exchanging fluid capable of transferring heat from first fuel cell unit 110. According to one embodiment, the heat exchanging fluid and the oxidant are supplied from the same source. In an alternative embodiment, the heat exchanging fluid flow and the oxidant flow are supplied from distinct sources. Examples of heat exchanging fluids include, without limitation, air, steam, oxygen, hydrogen, water, helium, reformed fuel, unreformed fuel, and combinations thereof. Heat transfer from first fuel cell unit 110 and the heat exchanging fluid beneficially maintains a thermal gradient of fuel cell stack 150 within a predetermined range or limit. In those embodiments wherein the heat exchanging fluid is unreformed fuel, the heat transfer additionally serves to reform the fuel for subsequent use in electric power generation.

In another embodiment, first fuel cell unit 110 and second fuel cell unit 130 have the fuel flow parallel to the oxidant flow. In an alternative embodiment, the fuel flow is antiparallel to the oxidant flow. In still another alternative embodiment, as illustrated in Figure 3 and Figure 4, the fuel flow is orthogonal to the oxidant flow. In accordance with the embodiment of the present invention illustrated in Figure 3 and Figure 4, the heat exchanging fluid flow is orthogonal to the fuel flow and the oxidant flow.

For completeness, various aspects of the invention are set out in the following numbered clauses:
1. A fuel cell assembly (100) comprising:

a first fuel cell unit (110) adapted for generating electrical power from a fuel flow and an oxidant flow; and
a fluid heat exchanger (120) adapted for transferring heat between said first fuel cell unit (110) and a heat exchanging fluid flow.

2. The fuel cell assembly (100) of Clause 1, wherein said heat exchanging fluid flow is orthogonal to said fuel flow and said oxidant flow.
3. The fuel cell assembly (100) of Clause 1, further comprising:
   a second fuel cell unit (130); and
   an interconnection unit (140) adapted for electrically and fluidically coupling said first fuel cell unit (110) to said second fuel cell unit (130).
4. The fuel cell assembly (100) of Clause 3, wherein said fluid heat exchanger (120) is disposed inside said interconnection unit (140).
5. The fuel cell assembly (100) of Clause 1, wherein said heat exchanging fluid flow and said oxidant flow are supplied from distinct sources.
6. The fuel cell assembly (100) of Clause 1, wherein said heat exchanging fluid flow comprises a heat exchanging fluid selected from the group consisting of air, steam, oxygen, hydrogen, helium, water, reformed fuel, unreformed fuel, and combinations thereof.
7. A fuel cell assembly (100) comprising:
   a first fuel cell unit (110) adapted for generating electrical power from a fuel flow and an oxidant flow;
   a fluid heat exchanger (120) adapted for transferring heat between said first fuel cell unit (110) and a heat exchanging fluid flow, said heat exchanging fluid flow being orthogonal to said fuel flow and said oxidant flow;
   a second fuel cell unit (130); and
   an interconnection unit (140) adapted for electrically and fluidically coupling said first fuel cell unit (110) to said second fuel cell unit (130).
8. The fuel cell assembly (100) of Clause 7 wherein said fluid heat exchanger (120) is disposed inside said interconnection unit (140).
9. The fuel cell assembly (100) of Clause 7 wherein said heat exchanging fluid flow and said oxidant flow are supplied from distinct sources.
10. The fuel cell assembly (100) of Clause 7 wherein said heat exchanging fluid flow comprises a heat exchanging fluid selected from the group consisting of air, steam, oxygen, hydrogen, helium, water, reformed fuel, unreformed fuel, and combinations thereof.
11. A method comprising:
   generating electrical power from a fuel flow and an oxidant flow using a first fuel cell unit (110); and
   transferring heat between said first fuel cell unit (110) and a heat exchanging fluid flow using a fluid heat exchanger (120).
12. The method of Clause 11 wherein said heat exchanging fluid flow is orthogonal to said fuel flow and said oxidant flow.
13. The method of Clause 11 further comprising:
   generating electrical power from said fuel flow and said oxidant flow using a second fuel cell unit (130); and
   electrically and fluidically coupling said first fuel cell unit (110) to said second fuel cell unit (130) using an interconnection unit (140).
14. The method of Clause 13 wherein said fluid heat exchanger (120) is disposed inside said interconnection unit (140).
15. The method of Clause 11 wherein said heat exchanging fluid flow and said oxidant flow are supplied from distinct sources.
16. The method of Clause 11 wherein said heat exchanging fluid flow comprises a heat exchanging fluid selected from the group consisting of air, steam, oxygen, hydrogen, helium, water, reformed fuel, unreformed fuel, and combinations thereof.
17. A method comprising:
   generating electrical power from a fuel flow and an oxidant flow using a first fuel cell unit (110); and
   transferring heat between said first fuel cell unit (110) and a heat exchanging fluid flow using a fluid heat exchanger (120), said heat exchanging fluid flow being orthogonal to said fuel flow and said oxidant flow;
   generating electrical power from said fuel flow and said oxidant flow using a second fuel cell unit (130); and
   electrically and fluidically coupling said first fuel cell unit (110) to said second fuel cell unit (130) using an interconnection unit (140).
18. The method of Clause 17 wherein said fluid heat exchanger (120) is disposed inside said interconnection unit (140).
19. The method of Clause 17 wherein said heat exchanging fluid flow and said oxidant flow are supplied from distinct sources.
20. The method of Clause 17 wherein said heat exchanging fluid flow comprises a heat exchanging fluid selected from the group consisting of air, steam, oxygen, hydrogen, helium, water, reformed fuel, unreformed fuel, and combinations thereof.

## Claims

1. A fuel cell assembly (100) comprising:
a first fuel cell unit (110) adapted for generating electrical power from a fuel flow and an oxidant flow; and
a fluid heat exchanger (120) adapted for transferring heat between said first fuel cell unit (110) and a heat exchanging fluid flow.

2. The fuel cell assembly (100) of Claim 1, wherein said heat exchanging fluid flow is orthogonal to said fuel flow and said oxidant flow.

3. The fuel cell assembly (100) of Claim 1, further comprising:
a second fuel cell unit (130); and
an interconnection unit (140) adapted for electrically and fluidically coupling said first fuel cell unit (110) to said second fuel cell unit (130).

4. The fuel cell assembly (100) of Claim 3, wherein said fluid heat exchanger (120) is disposed inside said interconnection unit (140).

5. The fuel cell assembly (100) of Claim 1, wherein said heat exchanging fluid flow and said oxidant flow are supplied from distinct sources.

6. The fuel cell assembly (100) of Claim 1, wherein said heat exchanging fluid flow comprises a heat exchanging fluid selected from the group consisting of air, steam, oxygen, hydrogen, helium, water, reformed fuel, unreformed fuel, and combinations thereof.

7. A fuel cell assembly (100) comprising:
a first fuel cell unit (110) adapted for generating electrical power from a fuel flow and an oxidant flow;
a fluid heat exchanger (120) adapted for transferring heat between said first fuel cell unit (110) and a heat exchanging fluid flow, said heat exchanging fluid flow being orthogonal to said fuel flow and said oxidant flow;
a second fuel cell unit (130); and
an interconnection unit (140) adapted for electrically and fluidically coupling said first fuel cell unit (110) to said second fuel cell unit (130).

8. A method comprising:
generating electrical power from a fuel flow and an oxidant flow using a first fuel cell unit (110); and
transferring heat between said first fuel cell unit (110) and a heat exchanging fluid flow using a fluid heat exchanger (120).

9. The method of Claim 8 further comprising:
generating electrical power from said fuel flow and said oxidant flow using a second fuel cell unit (130); and
electrically and fluidically coupling said first fuel cell unit (110) to said second fuel cell unit (130) using an interconnection unit (140).

10. A method comprising:
generating electrical power from a fuel flow and an oxidant flow using a first fuel cell unit (110); and
transferring heat between said first fuel cell unit (110) and a heat exchanging fluid flow using a fluid heat exchanger (120), said heat exchanging fluid flow being orthogonal to said fuel flow and said oxidant flow;
generating electrical power from said fuel flow and said oxidant flow using a second fuel cell unit (130); and
electrically and fluidically coupling said first fuel cell unit (110) to said second fuel cell unit (130) using an interconnection unit (140).
